# EUROPÄISCHE PATENTANMELDUNG

(11) **EP 2 266 828 A2**
(43) Veröffentlichungstag der Anmeldung: **29.12.2010**
(21) Anmeldenummer: 10006216.5
(22) Anmeldetag: 16.06.2010
(51) Int. Cl.: B60K 1/04

(54) **Anordnung zur Intergration von elektrischen Speichermodulen in die Karosserie eines Kraftfahrzeugs**

(30) Priorität: 16.06.2009 DE 102009025431
(71) Anmelder: Benteler Automobiltechnik GmbH, 33102 Paderborn (DE)
(72) Erfinder: Seifert, Frank, 82131 Gauting (DE); Sixt, Christian, 84034 Landshut (DE)
(74) Vertreter: Ksoll, Peter

(57) **Zusammenfassung**

Bei der Anordnung zur Integration von elektrischen Speichermodulen (17) in die Karosserie (2) eines Kraftfahrzeugs (1) sind die elektrischen Speichermodule (17) in einer rahmenartigen Kassette (10) austauschbar gelagert und untereinander sowie mit einem an der Kassette (10) vorgesehenen elektrischen Anschlusskontakt (20) elektrisch gekoppelt. In die Karosserie (2) ist eine gehäuseartige Kassettenaufnahme (5) eingegliedert, der ein mit dem elektrischen Bordnetz (7) verbundener und mit dem elektrischen Anschlusskontakt (20) an der Kassette (10) zusammensteckbarer elektrischer Anschluss (6) zugeordnet ist.

## Beschreibung

Die Erfindung betrifft eine Anordnung zur Integration von elektrischen Speichermodulen in die Karosserie eines Kraftfahrzeugs gemäß den Merkmalen im Oberbegriff des Anspruchs 1.

Kraftfahrzeuge, die wenigstens zum Teil mit elektrischer Energie angetrieben werden (sogenannte Hybridantriebe), zählen zum Stand der Technik. Die elektrische Energie für den elektrischen Antriebsmotor wird hierbei von elektrischen Speichermodulen in Form von Akkumulatoren bereitgestellt. Um die notwendige Leistung eines elektrischen Antriebs zu gewährleisten, ist es ferner erforderlich, mehrere elektrische Speichermodule zusammenzuschalten. Was die derzeit auf dem Markt verfügbaren elektrischen Speichermodule betrifft, welche die für einen elektrischen Antrieb notwendigen Anforderungen hinsichtlich Kapazität, Leistung und Lebensdauer erfüllen, so haben diese nach wie vor ein hohes Gewicht. Das Eigengewicht eines einzelnen elektrischen Speichermoduls liegt zwischen ca. 25 kg und 80 kg. Mithin ist im Prinzip für jeden Fahrzeugtyp unter Berücksichtigung der Crashsicherheit und des Handlings für die Montage sowie den Austausch von elektrischen Speichermodulen eine spezielle Halterung an der Karosserie zwangsläufig notwendig. Auch sind solche elektrischen Speichermodule vergleichsweise teuer. Ferner sind sie in ihrer Ausgestaltung sehr unterschiedlich. Dies wirkt sich dann auch auf das Befestigen der elektrischen Speichermodule in den Kraftfahrzeugen aus, weil die elektrischen Speichermodule an der Karosserie statisch fest verankert sein müssen. Ein Austausch von elektrischen Speichermodulen ist zudem arbeitsaufwendig.

Der Erfindung liegt - ausgehend vom Stand der Technik - die Aufgabe zugrunde, eine Anordnung zur Integration von elektrischen Speichermodulen in die Karosserie eines Kraftfahrzeugs zu schaffen, welche eine leichte Austauschbarkeit und Verbaubarkeit auch unterschiedlicher elektrischer Speichermodule erlaubt.

Die Lösung dieser Aufgabe besteht nach der Erfindung in den Merkmalen des Anspruchs 1.

Vorteilhafte Weiterbildungen der Erfindung sind Gegenstand der Ansprüche 2 bis 13.

Dementsprechend werden nunmehr mindestens zwei, in der Regel jedoch mehr als zwei elektrische Speichermodule in einer rahmenartigen Kassette austauschbar gelagert. Hierbei wird die Kassette so ausgebildet, dass auch elektrische Speichermodule verschiedenster Ausführungen eingebracht werden können. Die in die Kassette eingelagerten elektrischen Speichermodule werden sowohl untereinander als auch mit einem elektrischen Anschlusskontakt elektrisch gekoppelt, der an der Kassette vorgesehen ist. Bei den Speichermodulen handelt es sich insbesondere um Akkumulatoren.

In der Karosserie eines Kraftfahrzeugs wird eine gehäuseartige Kassettenaufnahme vorgesehen, in welche die Kassette mit den elektrischen

Speichermodulen nach dem Prinzip eines Wechselsystems bevorzugt eingeschoben und auch wieder herausgezogen werden kann. Die Kassettenaufnahme besitzt einen elektrischen Anschluss, der mit dem elektrischen Bordnetz verbunden ist und mit dem an der Kassette vorgesehenen elektrischen Anschlusskontakt zusammengefügt werden kann. Beispielsweise ist der Anschlusskontakt an der Kassette als Stecker und der Anschluss an der Kassettenaufnahme als Steckerbuchse ausgebildet. Selbstverständlich ist auch eine andere Anordnung vorstellbar.

Das Bestücken der Kassette mit neuen oder frisch aufgeladenen elektrischen Speichermodulen erfolgt außerhalb des Kraftfahrzeugs. Dass heißt, dass stets eine komplett bestückte Kassette in die Kassettenaufnahme eingeführt wird und nach ihrem Einführen sofort mit dem elektrischen Bordnetz gekoppelt ist.

Aufgrund des Gewichts der elektrischen Speichermodule ist es vorteilhaft, wenn das Wechseln der Kassetten mit Hilfe entsprechend ausgebildeter Handhabungsgeräte oder Laderoboter erfolgt.

Zweckmäßig ist in der Kassette eine Lade-/Steuerelektronik vorgesehen. Mit Hilfe einer solchen Elektronik kann auch dann eine Wiederaufladung der elektrischen Speichermodule durchgeführt werden, wenn sich die elektrischen Speichermodule in der Kassette befinden und die Kassette in die Kassettenaufnahme eingesetzt ist.

Zu diesem Zweck kann der Kassette ein Ladekabel zugeordnet sein. Auf diese Weise kann bei Bedarf ein Wiederaufladen der elektrischen Speichermodule auch an Ladestationen erfolgen, die - ähnlich wie herkömmliche Tankstellen - entlang von Kraftfahrzeugstraßen eingerichtet sind oder noch werden, ohne dass ein Austauschen der Kassetten erforderlich ist.

Des Weiteren ist es im Hinblick auf die Wärmeentwicklung an den elektrischen Speichermodulen zweckmäßig, wenn die Kassette mit einem Kühlsystem ausgerüstet ist.

Auf dem Boden der Kassette sind zweckmäßig Fixierleisten als Bestandteil von lagemäßig veränderbaren Einsätzen angeordnet. Je nach Größe und Konfiguration der elektrischen Speichermodule können mithin die Fixierleisten in ihrer Relativlage verändert und auf diese Weise die elektrischen Speichermodule sicher in der Kassette fixiert werden.

Elastische Dämpfungsglieder auf dem Boden der Kassette stützen die elektrischen Speichermodule und minimieren auftretende Schwingungen. Die Dämpfungsglieder können als Gummipuffer ausgebildet sein.

Auftretende Wärme wird ferner dadurch leichter abgeführt, dass die Längswände und eine Deckplatte der Kassette mit bevorzugt großflächigen Aussparungen versehen sind.

Sowohl das Einführen einer Kassette in die Kassettenaufnahme als auch die Entfernung der Kassette werden erleichtert, wenn auf der Unterseite des Bodens, auf der Deckplatte sowie an den Außenseiten der Längswände der Kassette längsgerichtete Ausgleichsleisten vorgesehen sind. Diese Ausgleichsleisten können aus einem elastischen Material, wie beispielsweise einem geeigneten Kunststoff, bestehen, so dass die Kassette so in der Kassettenaufnahme gehalten ist, dass die Übertragung von Schwingungen auf ein Mindestmaß reduziert wird.

Eine die elektrischen Speichermodule nach oben fixierende Deckplatte ist vorteilhaft an der Kassette verrastbar. Die Verrastung kann an einer Kassettenwand oder an mehreren Kassettenwänden erfolgen.

Im Hinblick auf die Erfassung einer Kassette mit Hilfe eines Handhabungsgerätes oder eines Roboters einerseits sowie auf eine korrekte elektrische Verbindung des Anschlusskontakts an der Kassette mit dem elektrischen Anschluss an der Kassettenaufnahme ist es ferner zweckmäßig, dass eine Stirnseite der Kassette mit einer auch den Anschlusskontakt tragenden geschlossenen Stirnwand versehen und die andere Stirnseite offen ausgebildet ist.

Obwohl es denkbar ist, dass die Kassettenaufnahme nachträglich in ein Kraftfahrzeug mit einem bereits existierenden elektrischen Antrieb eingebaut werden kann, ist es von Vorteil, dass die Kassettenaufnahme einen fest eingegliederten Bestandteil der Karosserie bildet.

Die Lage der Kassette in der Kassettenaufnahme wird dadurch gesichert, dass an der Mündung der Kassettenaufnahme eine verriegelbare Klappe vorgesehen ist. Die Bedienung der Klappe kann manuell oder auch ferngesteuert aus der Distanz erfolgen.

Schließlich ist es noch von Vorteil, wenn auch die Kassette selber in der Kassettenaufnahme verriegelbar ist.

Im Rahmen der Erfindung ist es auch möglich, in die Kassettenaufnahme mehrere Kassetten zu integrieren. So ist es beispielsweise möglich, von jeder Fahrzeugseite her eine Kassette einzuschieben. In einer weiteren vorteilhaften Ausführungsvariante sind vier Kassetten in eine im Fahrzeugboden zentral angeordnete Kassettenaufnahme einsteckbar. Jeweils zwei Kassetten können dabei von jeder Seite des Kraftfahrzeuges in die Kassettenaufnahme in einer Einschubrichtung, die im wesentlichen in Fahrzeug-Y-Richtung verläuft, eingesteckt werden.

Die Verriegelung der eingeschobenen Kassetten erfolgt mit einer karosseriefesten Klappe und/oder einer zusätzlichen Verriegelung des Einschubs innerhalb des Fahrzeugs. Ebenfalls ist es auch hier möglich, eine Ladeelektronik mit in den Einschub zu integrieren bzw. ein erforderliches Kühlsystem zum Kühlen der elektrischen Speichermodule innerhalb der Kassetten. Besonders vorteilig an der erfindungsgemäßen Anordnung ist, dass aufgrund der kompakteren Bauart jeder einzelnen Kassette bei vier Kassetten ein komplettes Austauschen der Kassetten leicht möglich ist. Ähnlich einem Nachtanken ist somit nicht nur ein Aufladebetrieb durch einen elektrischen Anschluss an eine Stromquelle mit einem Kabel, sondern auch ein kompletter Tausch sämtlicher Akkumulatoren besonders einfach möglich.

Es ist ebenfalls möglich, bei einer konsequenten Weiterentwicklung der elektrischen Speicherbausteine, die Kassetten mit anderen leistungsfähigeren elektrischen Speicherbausteinen auszurüsten bzw. nachzurüsten und wiederum in das bereits vorhandene Schienensystem einzuführen. Das Schienensystem ist dabei durch die Kassettenaufnahme im Fahrzeugboden angeordnet. Auch bei verschiedenen einzelnen Kassetten kann die Ladeelektronik oder aber auch ein erforderliches Kühlsystem in die Kassettenaufnahme eingebracht sein.

Im Rahmen der Erfindung ist es ebenfalls möglich, dass das Fahrzeug beispielsweise auch nur im Falle von vier einzubringenden Kassetten mit zwei Kassetten oder aber nur einer Kassette betrieben wird. Die anderen Kassetten können dann zum Laden in einer entsprechenden Ladeanordnung verbleiben. Erfindungsgemäß ergibt sich somit insbesondere der Vorteil, dass die Kassettenaufnahme unter weiterer Entwicklung der Akkumulatorentechnologie, in einem Kraftfahrzeug verbleiben kann und dann die Kassetten mit besseren leistungsfähigeren Akkumulatoren nachgerüstet werden können, ohne große Umbauarbeiten am Fahrzeug vornehmen zu müssen. Ebenfalls bietet sich der Vorteil im Falle eines Defektes eines Akkumulators bzw. eines elektrischen Speicherbausteins, durch einfaches Austauschen der Kassette eine besonders kostengünstige Wartungsmaßnahme oder Reparaturmaßnahme durchzuführen.

Die Erfindung ist nachfolgend anhand eines in den Zeichnungen veranschaulichten Ausführungsbeispiels näher erläutert. Es zeigen:
- Figur 1: im vertikalen Schnitt im Schema ein Kraftfahrzeug mit einer elektrische Speichermodule enthaltenden Kassette;
- Figur 2: in vergrößerter perspektivischer Darstellung die Kassette der Figur 1;
- Figur 3: ebenfalls in vergrößerter perspektivischer Darstellung die Kassette der Figur 2 in einer anderen Position;
- Figur 4: in perspektivischer Darstellung eine Deckplatte für die Kassette;
- Figur 5: in perspektivischer Darstellung eine Innenansicht der Kassette bei abgenommener Deckplatte und
- Figur 6: eine perspektivische Ansicht eines schematisch dargestellten Kraftfahrzeugs mit erfindungsgemäßer Kassettenaufnahme.

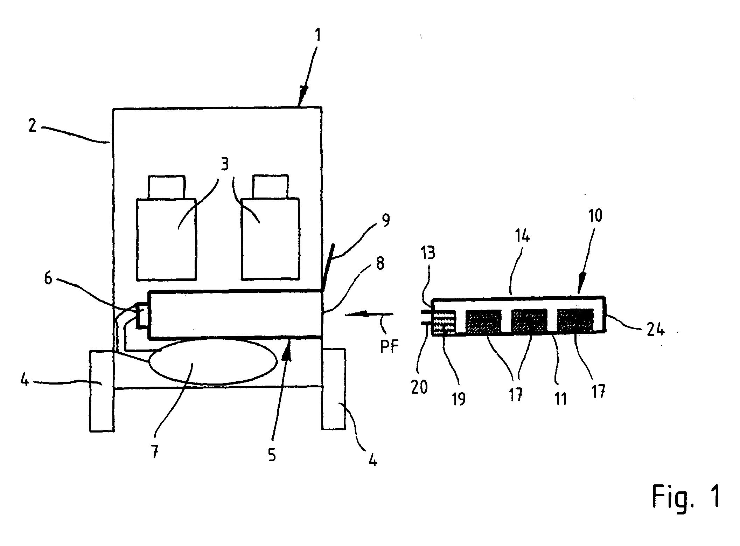

Mit 1 ist in der Figur 1 im Schema ein Kraftfahrzeug bezeichnet. Mit 2 ist die Karosserie, mit 3 sind die Sitze und mit 4 die Räder angedeutet.

Bestandteil der Karosserie 2 bildet eine Kassettenaufnahme 5 mit einem am inneren Ende vorgesehenen elektrischen Anschluss 6, beispielsweise in Form einer Steckerbuchse, die mit einem elektrischen Bordnetz 7 verbunden ist. An der Mündung 8 der Kassettenaufnahme 5 befindet sich eine vertikal schwenkbare Klappe 9, die bei vor die Mündung 8 geschwenkter Lage mit der Kassettenaufnahme 5 oder der Karosserie 2 verriegelt werden kann.

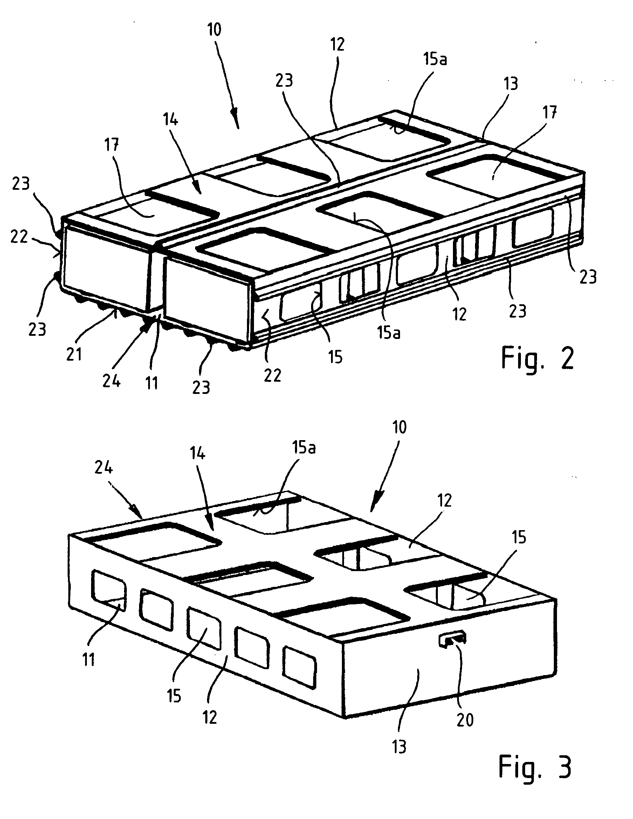

In die Kassettenaufnahme 5 ist eine aus den Figuren 2 bis 5 näher erkennbare Kassette 10 einschiebbar. Das Einschieben der Kassette 10 in die Kassettenaufnahme 5 gemäß dem Pfeil PF der Figur 1 und auch die Entfernung der Kassette 10 erfolgt zweckmäßig mit einem nicht näher veranschaulichten Handhabungsgerät.

Die Kassette 10 setzt sich aus einem Boden 11, zwei Längswänden 12, einer Stirnwand 13 sowie einer Deckplatte 14 zusammen, die mit den Längswänden 12 und/oder der Stirnwand 13 verrastbar ist. In den Längswänden 12 und in der Deckplatte 14 befinden sich großflächige Aussparungen 15, 15a. Die Stirnseite 24 der Kassette 10 ist offen ausgebildet.

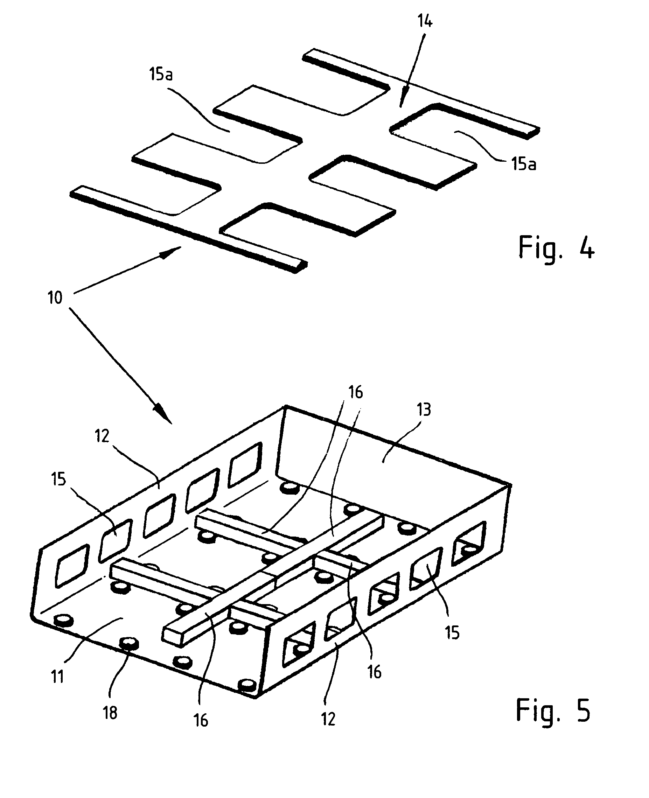

Wie insbesondere der Figur 5 zu entnehmen ist, sind auf dem Boden 11 der Kassette 10 mehrere Fixierleisten 16 angeordnet. Diese Fixierleisten 16 sind in ihrer Relativlage veränderbar, so dass in die Kassette 10 elektrische Speichermodule 17 unterschiedlicher Größe eingegliedert und lagegesichert festgelegt werden können. Zur Minimierung von Schwingungen werden die elektrischen Speichermodule 17 auf elastische Dämpfungsglieder 18, beispielsweise aus Gummipuffern, gesetzt, die auf dem Boden 11 angeordnet sind.

Ferner zeigt die Figur 1, dass in der Kassette 10 eine Lade-/Steuerelektronik 19 vorgesehen ist. Bestandteil dieser Elektronik 19 kann auch ein nicht näher veranschaulichtes Ladekabel sein.

An der Stirnwand 13 der Kassette 10 ist ein elektrischer Anschlusskontakt 20 vorgesehen, der beispielsweise als Stecker ausgebildet ist und mit dem als Steckerbuchse ausgebildeten elektrischen Anschluss 6 am inneren Ende der Kassettenaufnahme 5 zusammengefügt werden kann. Dieser elektrische Anschlusskontakt 20 ist mit den in der Kassette 10 vorhandenen elektrischen Speichermodule 17 zusammengeschaltet.

Außerdem lässt die Figur 2 noch erkennen, dass auf der Unterseite 21 des Bodens 11, auf der Deckplatte 14 sowie an den Außenseiten 22 der Längswände 12 der Kassette 10 längsgerichtete Ausgleichsleisten 23 vorgesehen sind, welche eine einwandfreie Lage der Kassette 10 bei in die Kassettenaufnahme 5 eingeschobener Position gewährleisten. Die Ausgleichsleisten 23 bestehen zum Beispiel aus einem geeigneten begrenzt elastischen Kunststoff, der zugleich schwingungsdämpfend ist.

Hat die Kassette 10 ihre Endposition in der Kassettenaufnahme 5 erreicht, wird über den Stecker 20 und den als Steckerbuchse ausgebildeten elektrischen Anschluss 6 automatisch ein elektrischer Kontakt zwischen den elektrischen Speichermodulen 17 und dem Bordnetz 7 hergestellt, so dass dann am nicht näher veranschaulichten Antriebsmotor die elektrische Antriebsenergie zur Verfügung gestellt werden kann.

Die Kassette 10 kann in der komplett eingeschobenen Betriebslage in nicht näher dargestellter Weise mit der Kassettenaufnahme 5 verriegelt werden.

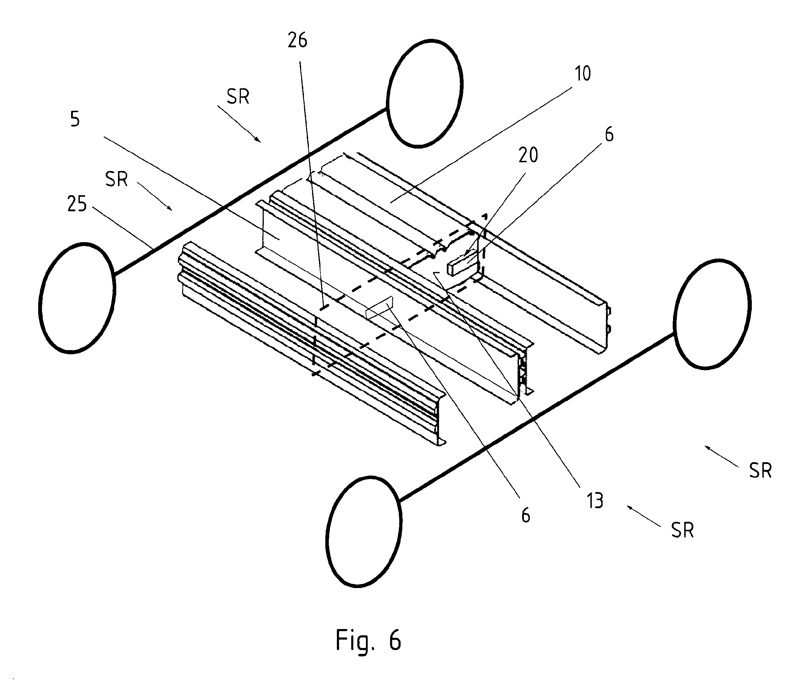

Figur 6 zeigt eine perspektivische schematische Darstellung eines Kraftfahrzeugbodens 25 mit einer Kassettenaufnahme 5, in der vier erfindungsgemäße rahmenartige Kassetten 10 mit integrierten elektrischen Speichermodulen einschiebbar sind. Dargestellt ist in Figur 6 nur eine eingeschobene Kassette 10. Die Einschieberichtung erfolgt jeweils in den eingezeichneten Schubrichtungen SR. Jede Kassette 10 weist an ihrer Stirnwand 13 einen elektrischen Anschlusskontakt 20 auf, der in elektrische Anschlüsse 6 in einer zentralen Kontaktschiene 26, die etwa mittig des Kraftfahrzeugs angeordnet ist, einsteckbar ist. Die Kassetten 10 können somit omnifunktional in jeden Einschubschacht eingeschoben werden.

**Bezugszeichen:**
- 1 -: Kraftfahrzeug
- 2 -: Karosserie
- 3 -: Sitze
- 4 -: Räder
- 5 -: Kassettenaufnahme
- 6 -: elektrischer Anschluss an 5
- 7 -: Bordnetz
- 8 -: Mündung v. 5
- 9 -: Klappe
- 10-: Kassette
- 11 -: Boden v. 10
- 12 -: Längswände v. 10
- 13 -: Stirnwand v. 10
- 14 -: Deckplatte v. 10
- 15 -: Aussparungen in 12
- 15a -: Aussparungen in 14
- 16 -: Fixierleisten
- 17 -: elektrisches Speichermodul
- 18 -: Dämpfungsglieder
- 19 -: Lade/Steuerelektronik
- 20 -: Anschlusskontakt an 13
- 21 -: Unterseite v. 11
- 22 -: Außenseiten v. 12
- 23 -: Ausgleichsleisten
- 24 -: offene Stirnseite v. 10
- 25 -: Kraftfahrzeugboden
- 26 -: zentrale Kontaktschiene

- PF -: Pfeil
- SR -: Schubrichtung

## Patentansprüche

1. Anordnung zur Integration von elektrischen Speichermodulen (17) in die Karosserie (2) eines Kraftfahrzeugs (1), **dadurch gekennzeichnet, dass** mindestens zwei elektrische Speichermodule (17) in einer rahmenartigen Kassette (10) austauschbar gelagert und untereinander sowie mit einem an der Kassette (10) vorgesehenen elektrischen Anschlusskontakt (20) elektrisch gekoppelt sind, wobei in die Karosserie (2) eine gehäuseartige Kassettenaufnahme (5) eingegliedert ist, der ein mit dem elektrischen Bordnetz (7) verbundener und mit dem elektrischen Anschlusskontakt (20) an der Kassette (10) zusammensteckbarer elektrischer Anschluss (6) zugeordnet ist.

2. Anordnung nach Anspruch 1, **dadurch gekennzeichnet, dass** in der Kassette (10) eine Lade-/Steuerelektronik (19) vorgesehen ist.

3. Anordnung nach Anspruch 1 oder 2, **dadurch gekennzeichnet, dass** der Kassette (10) ein Ladekabel zugeordnet ist.

4. Anordnung nach einem der Ansprüche 1 bis 3, **dadurch gekennzeichnet, dass** die Kassette (10) mit einem Kühlsystem ausgerüstet ist.

5. Anordnung nach einem der Ansprüche 1 bis 4, **dadurch gekennzeichnet, dass** auf dem Boden (11) der Kassette (10) Fixierleisten (16) verstellbar angeordnet sind.

6. Anordnung nach einem der Ansprüche 1 bis 5, **dadurch gekennzeichnet, dass** auf dem Boden (11) der Kassette (10) elastische Dämpfungsglieder (18) angeordnet sind.

7. Anordnung nach einem der Ansprüche 1 bis 6, **dadurch gekennzeichnet, dass** die Längswände (12) und eine Deckplatte (14) der Kassette (10) mit Aussparungen (15, 15a) versehen sind.

8. Anordnung nach einem der Ansprüche 1 bis 7, **dadurch gekennzeichnet, dass** auf der Unterseite (21) des Bodens (11), auf der Deckplatte (14) sowie an den Außenseiten (22) der Längswände (12) der Kassette (10) längs gerichtete Ausgleichsleisten (23) vorgesehen sind.

9. Anordnung nach einem der Ansprüche 1 bis 8, **dadurch gekennzeichnet, dass** eine Deckplatte (14) an der Kassette (10) verrastbar ist.

10. Anordnung nach einem der Ansprüche 1 bis 9, **dadurch gekennzeichnet, dass** eine Stirnseite der Kassette (10) mit einer auch den Anschlusskontakt (20) tragenden geschlossenen Stirnwand (13) versehen und die andere Stirnseite (24) offen ausgebildet ist.

11. Anordnung nach einem der Ansprüche 1 bis 10, **dadurch gekennzeichnet, dass** die Kassettenaufnahme (5) einen fest eingegliederten Bestandteil der Karosserie (2) bildet.

12. Anordnung nach einem der Ansprüche 1 bis 11, **dadurch gekennzeichnet, dass** an der Mündung (8) der Kassettenaufnahme (5) eine verriegelbare Klappe (9) vorgesehen ist.

13. Anordnung nach einem der Ansprüche 1 bis 12, **dadurch gekennzeichnet, dass** die Kassette (10) in der Kassettenaufnahme (5) verriegelbar ist.
